# EUROPEAN PATENT SPECIFICATION

(11) **EP 0 471 959 B1**
(45) Date of publication and mention of the grant of the patent: **07.05.1997**
(21) Application number: 91111069.0
(22) Date of filing: 04.07.1991
(51) Int. Cl.: H04N 5/44

(54) **Improved scanning converter device for television signals**
Verbesserte Vorrichtung zur Abtastumwandlung für Fernsehsignale
Dispositif amélioré de conversion de balayage pour signaux de télévision

(30) Priority: 06.07.1990 IT 6750490
(43) Date of publication of application: 26.02.1992
(73) Proprietor: Società Italiana per lo Sviluppo dell'Elettronica S.I.SV.EL. S.p.A., 10060 None (TO) (IT)
(72) Inventor: Biasiolo. Andrea, Treviso (IT)

(56) References cited:
- WO-A-85/02080
- FR-A- 2 604 049
- PHILIPS JOURNAL OF RESEARCH. vol. 41, no. 6, December 1986, EINDHOVEN NL pages 576 - 603; R-S. PRODAN: 'MULTIDIMENSIONAL DIGITAL SIGNAL PROCESSING FOR TELEVISION SCAN CONVERSION'
- IEEE 1990 INTERNATIONAL CONFERENCE ON CONSUMER ELECTRONICS,6-8JUNE 1990,ROSEMONT(US),ICCE DIGEST OF TECHNICAL PAPERS 'A.BIASOLO ET AL:"AN INTERLACED TO PROGRESSIVE SCAN CONVERTER FOR IMPROVED PAL SYSTEMS" ,P.264-265'

## Description

The present invention relates to a scanning device for television signals, in particular for a receiver of television signals, for converting the scanning from interlaced to progressive, comprising a linear bidimensional filter and an image movement detector, wherein there are provided means for adapting the filter according to data coming from the movement detector.

It is known that along with the increase of the dimensions and of the quality of television screens, the typical defects of the traditional television system PAL, 625 lines, 50 semiframes a second, interlaced two to two (system commonly abreviated from 625/50/2:1), become more evident.

Defects such as interline twitter, large area flicker, and line crawl are unacceptable in an improved quality television system: to improve or reduce such defects it is necessary to modify the parameters of traditional television scanning (interlacing ratio, number of lines per field, field presentation frequency). In particular to eliminate the interline twitter, it becomes appropriate to adopt a progressive scanning (without interlacing), to make the large area flicker seem invisible, it is necessary to increase the field frequency (at least to 75 Hz), to attenuate the line crawl it is necessary to increase the number of lines per frame (doing this also renders an improvement of the vertical resolution).

However the necessity of ensuring full compliance with the system in force and the necessity of transmitting corporations to avoid possible modifications to production and transmission establishments in use, in fact they impose improved quality television (I.Q.T.V.) in which signal elaboration is carried out exclusively in reception.

These facts have given a considerable impulse in recent years into the study of multidimensional interpolers and scanning convertors for television systems; in particular in this context the passage from the 625/50/2:1 to the 625/50/1:1 standards (P.S.U. Progressive Scan Up Conversion) and the following passage from 625/50/1:1 to the 625/100/1:1 (F.R.U. Field Rate Up Conversion) have been examined.

In the first case (P.S.U.), for obtaining a progressive scanning signal coming from the received interlaced scanning signal 2:1 it is necessary to operate an interpolation apt of supplying the missing lines of the signal received, that are then threaded between the original lines, thus obtaining a signal of 625 lines per field (625x50 = line frequency 31250 Hz).

In the second case (F.R.U.) it becomes necessary to double the number of fields per second available in the original signal, interpoling the missing fields by using to the full the available information of the incoming signal and producing an outgoing signal of 625 lines every 10 milliseconds.

Be it either the case of P.S.U. or the case of F.R.U., by carrying out the interpolation, a deterioration becomes more or less evident in the image zone in which a consistent movement is present; such deterioration becomes particularly visible in correspondence with spacial high frequencies and may be observed under the form of tails or blurring. There are two causes for this effect: the outgoing signal is not of limited band, which is usually not prefiltered; the movements of the image modify the spectrum of the signal.

Infact the spectrum of an image, in presence of pure translatorial movement for example, presents frequency components contained in an oriented plane in the three dimensional space in a dependant manner from the direction and the intensity of movement.

Schematically: in order to interpolate a new line between two fixed image lines, it is sufficient to calculate the average of two homologous lines belonging to neighbouring fields (temporarly interpolation or inter-field); if on the other hand the image is rapidly variable in time, then the missing line can be obtained from the line, that in the current field, is found immediately above and below the line in question (vertical interpolation or intra-field). Obviously the temporarly interpolation fails as soon as there are variations of the image, while the vertical one is deleterious in the presence of vertical transitions.

Solutions of fixed interpolation have been proposed in which their aim is to adapt the frequency response of the filter to the spectrum of the image (note for example: M. Weston, "Fixed adaptive and motion compensated interpolation of interlaced TV pictures", BBC RD 1988). One of these solutions provides as an example a vertico-temporal raster that extends for three fields in time and for five vertical lines; different weighing coefficients (1/2, 1/8, -1/16) are provided according to the considered line and field.

Another method consists in the use of a movement detector with the aim of adapting the intepolation by using an appropriate amount of inter-field and intra-field samples, varying according to the amount of movement present.

It is known from the article "Multidimensional digital signal processing for television scan conversion" by R.S. Prodan, Philips Journal of Research, vol. 41, No. 6, December 1986, pages 576-603, a scanning device for receiver of television signals, for converting the scanning from interlaced to progressive, comprising the combination of two monodimensional filters and an image movement detector, which however detects the movement evaluating only the pixel's magnitude difference; the value of k to be used for the interpolation is derived accordingly.

The obtainable results using the known techniques are not however completely satisfying; the obtainable compromise between fixed image condition and image in movement condition is not acceptable for a truly improved television.

The aim of the present invention is to indicate a scanning device for television signals that allows the possibility of obtaining results of a higher quality than those known, reaching a satisfactory compromise between fixed image conditions and image in movement conditions.

To allow for such aim the present invention has as its object a scanning device for television, in particular for a receiver of television signals, for converting the scanning from interlaced to progressive, comprising a linear bidimensional filter and an image movement detector, wherein there are provided means for adapting the filter according to data coming from the movement detector, characterized by the fact that the filter is a bidimensional non-separable filter and that the data coming from the movement detector and sent to the filter are representative of both the magnitude and the direction of the movement.

Further aims and advantages of the present invention will become clear from the following detailed description and annexed drawings, supplied as a non limiting example, wherein:
Figure 1 represents a simplified block diagram of a scanning convertor;
Figure 2 represents the mask of the interpolating filter for luminance signals (a) and crominance signals (b), according to the invention;
Figure 3 represents the block diagram of an interpolator utilizing the filter of figure 2;
Figure 4 represents the pixel blocks taken into consideration by the movement detector;
Figure 5 represents a simplified block diagram of the movement detector taking part of the convertor according to the invention;
Figure 6 represents a diagram of delay blocks contained in the convertor of figure 5;
Figure 7 the block diagram of the interpolation adapted according to the invention, indicating in particular how the modification of the filter mask in presence of image movement is realised.

The invention is based infact on the principle of adapting the frequency mask of the filter in correspondence to the zone of image movement, in an analogous way of the deformation endured by the spectrum of the image itself in presence of movement, adopting as starting mask the bidimensional linear filter planned in a suitable way so as to minimize the presence of the so called ringing, both of the overshoot and undershoot type; in the described example the movement detector is based on the differential algorithm by Cafforio and Rocca in three steps (see C. Cafforio - F. Rocca, "Methods for measuring small dislpacements of television images", IEEE Trans. Inform. theory, vol. 22, N°5, Sept. 1976), although another method could be used, such as the so called Block Matching for example (see H.G. Musmann et al, "Advances in picture coding", Proc. of IEEE, vol. 73, N°4, April 1985).

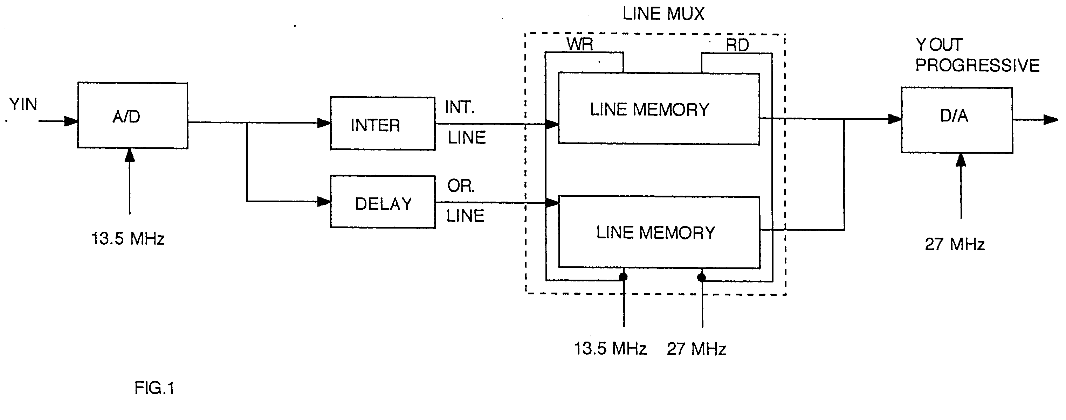

In figure 1 a simplified block diagram of a scanning convertor is represented; the diagram relates only to the part of the luminance signal (Y); as the crominance signals U and V need another two analogous channels, operating on the clock frequency equal to half of that for the signal Y (due to the smaller band width).

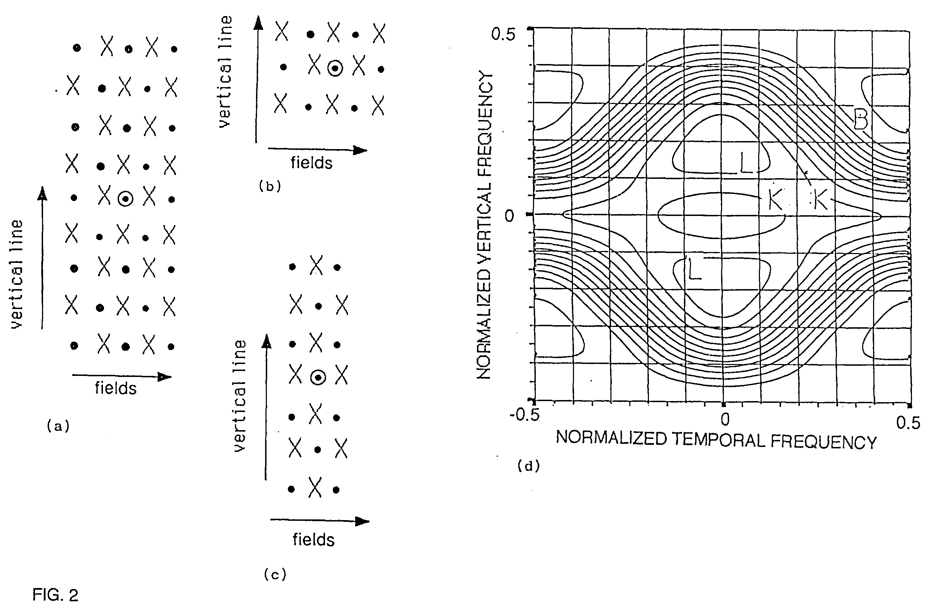

Figure 1 shows the luminance entrance signal Y of the interlaced signal, that is digitalized in a A/D convertor operating of the sampling frequency of 13,3 Mhz and quantized on 8 bit/sample; the digitalized signal enters the interpolator block INTER, where by means of an appropriate line and field delay arrangement, the necessary lines for obtaining, by means of interpolation, the missing lines in the current field are made available (see figure 2a); the original lines become opportunely delayed in the DELAY block, so as to bring them in phase with those interpolated.

The original and interpolated lines, simultaneously available, are memorized in two line memories, that become written (W) with a clock at 13,3 Mhz; such memories are then read (R) alternately with a clock at 26,6 Mhz, thus making available, previous D/A re-conversion, a signal apt of being sent to a double scanning monitor (31250 Hz).

In figure 2, the filter interpolator masks for luminance signals (a) and crominance signals (b), according to the invention are represented; the luminance signal provides a mask that extends for 9 vertically adjacent lines (therefore from the line n-4 to the line n+4) and on 5 consecutive fields (therefore from the field n-2 to the field n+2, see fig. 2a); the mask for the crominance signals is easier and extends for only three vertical lines and on three consecutive fields (see fig. 2b).

The crosses indicate the original pixels; the points indicating those to be interpolated; the double central circle indicates the pixel to calculate the interpolation (line n and field n), utilizing, in the case of signal Y the 22 original pixels of the complete mask of fig. 2a, and in the case of crominance signals, the 4 original pixels of the reduced mask of fig. 2b.

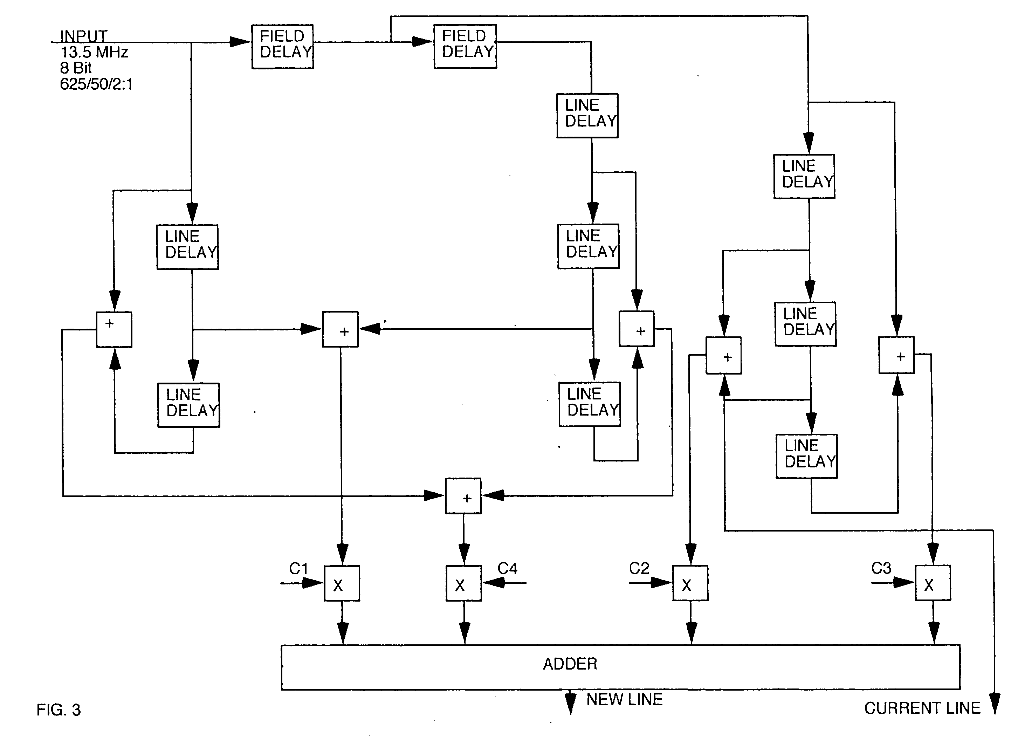

Figure 3 represents the block diagram of an interpolator as the one utilized in fig. 1; the incoming signal of 13,3 Mhz and 8 bit is appropriately passed through line (LD) and field (FD) delay blocks; the lines made available in this way are then added in a suitable way, so as to take advantage of symmetry of the interpolator filter and to reduce the number of multiplicators for the coefficients of the filter (C1, C2, C3, C4) and, finally, added for obtaining the new line. For simplicity sake, the mask realised by the interpolor described in fig.3 is simplified from that of 2b.

Until now we have only described a system of fixed bidimensional interpolation (vertico-temporal), without taking into account the adaption of this to an eventual image movement.

For realising an adaption of this nature, a movement detector is required.

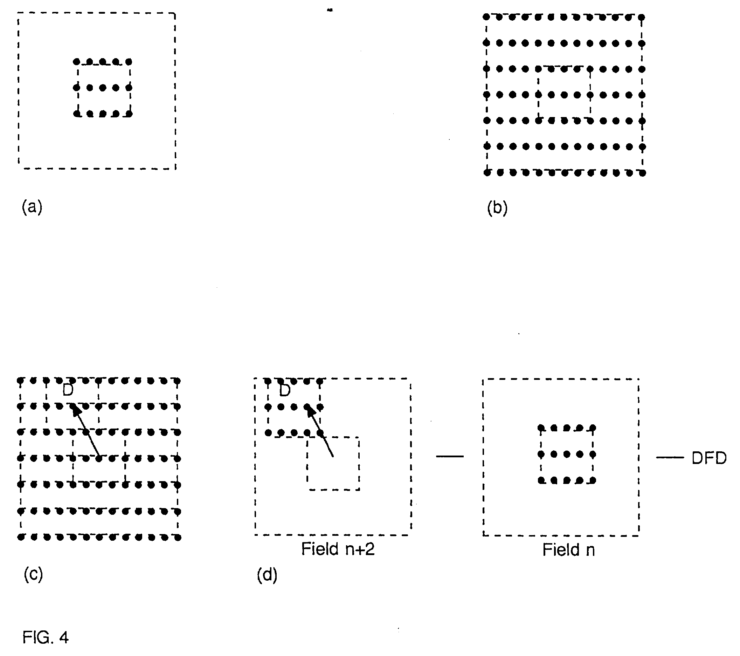

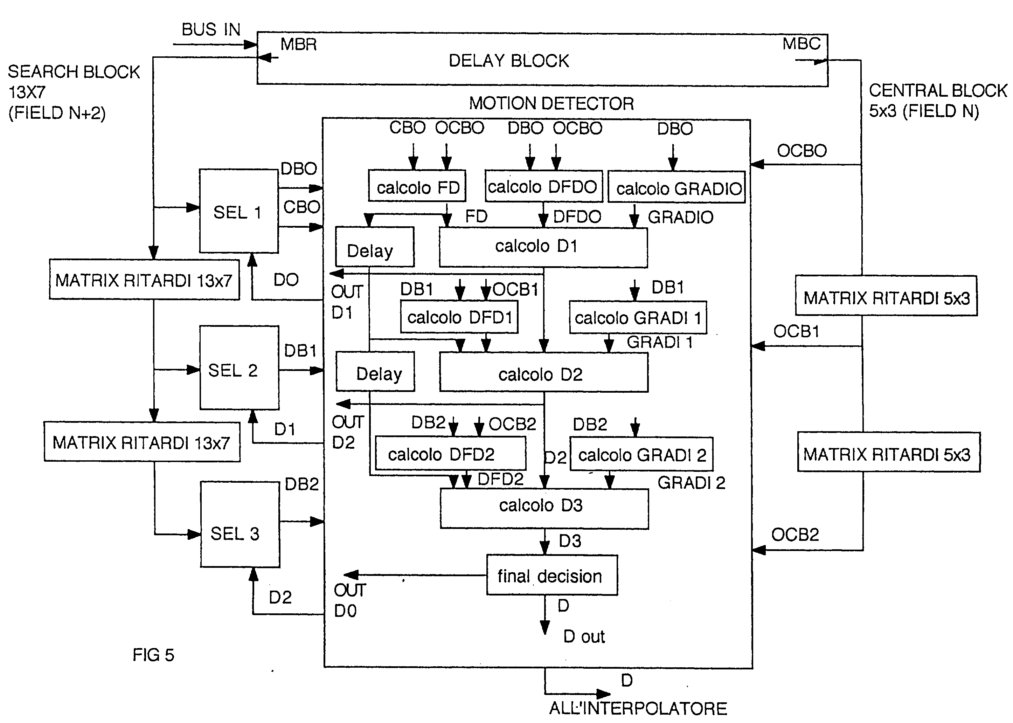

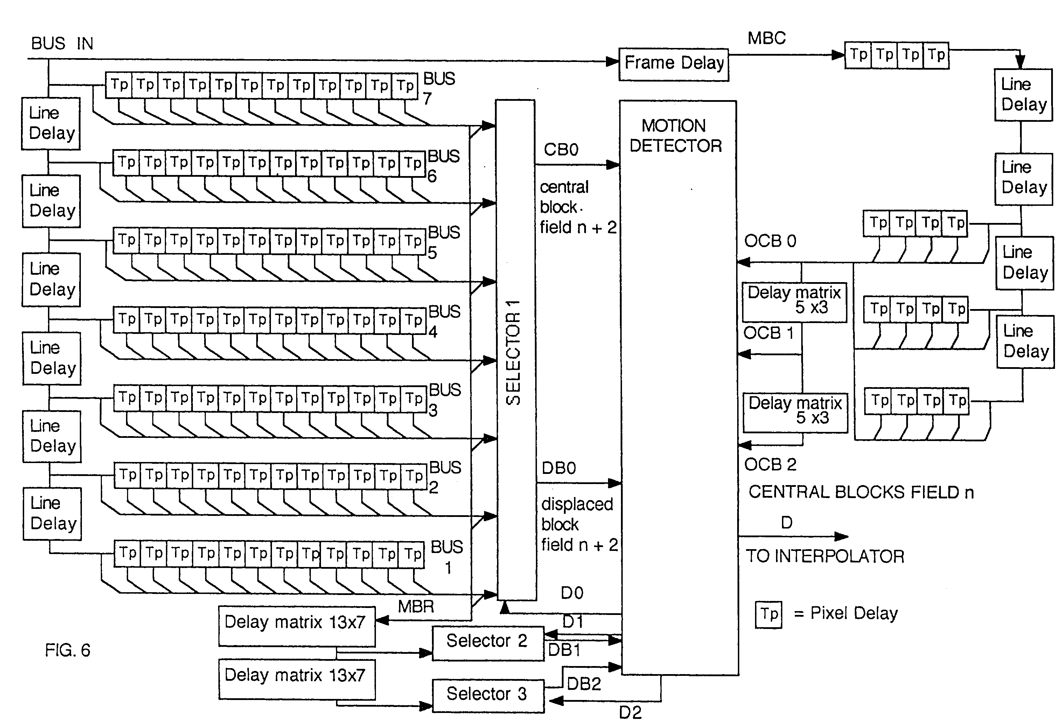

Figure 4 represents the pixel blocks taken into consideration by the movement detector according to the invention, whose simplified block diagram is represented in figure 5; the diagram of the delay blocks, contained in fig.5, is represented in figure 6.

The proposed diagram of the movement detector allows for the association of a movement vector at every image pixel to elaborate; the movement vector estimate is made considering for each pixel, a small neighbouring pixel block, made up of 5 pixels for 3 lines, for a total of 15 pixels (see fig. 4a).

Moreover a search area is considered, which extends to a super block of 91 pixels (13 pixels by 7 lines, see Fig. 4b).

The movement estimate is carried out considering, and on the current field, the 15 pixels of the small block of fig. 4a, on the corresponding field of the successive frame (field n+2), the 91 pixels of the super block of fig. 4b, made simultaneously available by an appropriate disposition of delays, represented in the diagram of fig. 6, in which Tp indicates the delay of a pixel, while LD indicates the delay of a line.

The pixel matrix of fig. 4b makes the selection of the block corresponding to the movement vector estimated at the previous step of the algorithm, necessary for calculating the displaced frame difference (DFD) and therefore the new estimate (see fig. 4c and 4d).

The pixel matrixes of figures 4a and 4b will also be suitably delayed, by means of the blocks MR (Matrice Ritardi) in fig. 5, so as to be available for the successive step of the algorithm for the updating of the estimate.

The described diagram of access to the pixels to be utilized for the estimate permits a high grade of parallelism of the operations, and therefore an elevated speed of calculation; the evaluating block has been realised with a structure of the pipeline type and provides, for each step, the functional blocks for the calculation of the Frame Difference (FD), of the Displaced Frame Difference (DFD), of the I gradient (GRAD I) and of the future estimate of the vector D (see fig. 5).

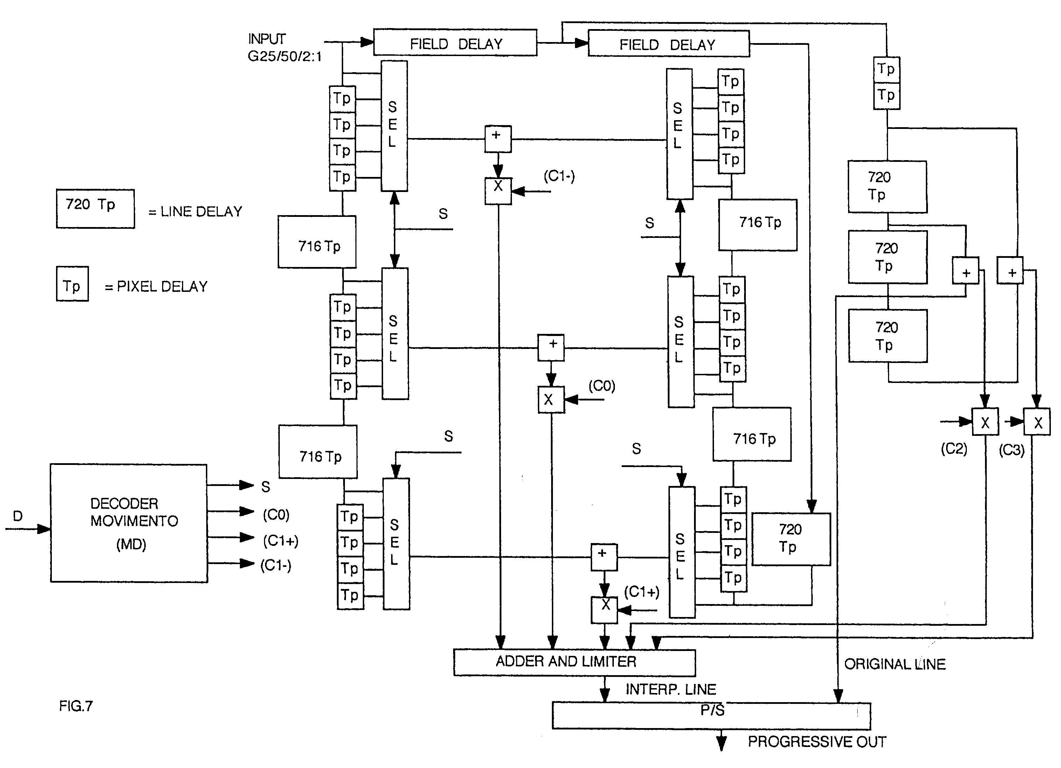

The estimated movement vector (D) is then sent to a decoder (MD, in fig.7), that supplies the control signals (S) necessary to the selectors (SEL) and the coefficients (C0, C1-, C1+) for carrying out the interpolation, see fig. 7, in which the block diagram of the adaptive interpoler according to the invention is represented; it outlines the non adaptive one of fig. 3, but incorporates more selector devices (SEL) of the delays assigned to the signals in transit.

Imagining a three dimensional space defined by three cartesian axes X, Y and T (time) one remembers that the spectrum of an image, in the presence of pure translatorial movement, presents frequency components all contained in an oriented plane in said three dimensional space depending on the direction and intensity of the movement present in the image.

The selectors of figure 7 make the rigid rotation of the plane Y-T around the Y axis possible, with the aim of compensating the traslation movement along the direction X, while the deformation of the barycenter type of the raster of the filter, necessary for compensating the movement along the direction Y, is obtained by acting directly on the value of the coefficients of the filter (C0, C1-, C1+).

The characteristics of the device described become clear from the effected description and annexed drawings.

From the description the advantages of the scanning convertor for television signals also becomne clear. In particular they are represented by the fact that with the described convertor a result far superior to that of the known devices is obtained.

## Claims

1. Scanning converting device for television, in particular for a receiver of television signals, for converting the scanning from interlaced to progressive, comprising a linear bidimensional filter and an image movement detector, wherein there are provided means for adapting the filter according to data coming from the movement detector, characterized by the fact that the filter is a bidimensional non-separable filter and that the data coming from the movement detector and sent to the filter are representative of both the magnitude and the direction of the movement.

2. Scanning converting device for television, according to claim 1, characterized by the fact that said bidimensional linear filter takes into consideration, for the interpolation of the luminance signal, pixels belonging to 9 consecutive fields.

3. Scanning converting device for television, according to claim 2, characterized by the fact that said bidimensional linear filter takes into consideration, for the interpolation of the crominance signal pixels belonging to 3 consecutive vertical lines and to 3 consecutive fields.

4. Scanning converting device for television, according to claim 1, characterized by the fact that said movement detector takes into consideration, for the estimate of movement, a pixel block on the current field made up of 5 adjacent pixels on 5 consecutive vertical lines.

5. Scanning converting device for television, according to claim 4, characterized by the fact that said movement detector takes into consideration, for the estimate of movement a pixel block on the second consecutive field to the current one, made up of 13 adjacent pixels on 7 consecutive vertical lines.

6. Scanning converting device for television, according to claim 1, characterized by the fact that said bidimensional linear filter is controlled by control signals (S) emitted from said movement detector, which act on selectors (SEL) contained in said filter, which select the delays assigned to the signals in transit.

7. Scanning converting device for television, according to claim 1, characterized by the fact hat said bidimensional linear filter in controlled by control signals (C0, C1-, C1+) emitted from said movement detector, that define variable interpolation coefficients for said filter.

## Patentansprüche

1. Abtast-Umwandlungsvorrichtung für Fernsehgeräte, insbesondere für einen Fernsehsignalempfänger, zum Umwandeln von der verschachtelten in die progressive Abtastung, mit einem linearen, bidimensionalen Filter und einem Bildbewegungsdetektor, wobei eine Einrichtung zum Anpassen des Filters entsprechend den von dem Bewegungsdetektor kommenden Daten vorgesehen ist,
dadurch gekennzeichnet, daß das Filter ein bidimensionales, nicht separabler Filter ist, und daß die von dem Bewegungsdetektor kommenden und zu dem Filter gesendeten Daten den Betrag und die Richtung der Bewegung darstellen.

2. Abtast-Umwandungsvorrichtung für Fernsehgeräte nach Anspruch 1,
dadurch gekennzeichnet, daß das bidimensionale lineare Filter für die Interpolation des Luminanzsignals Bildpunkte berücksichtigt, die zu neun aufeinanderfolgenden Teilbildern gehören.

3. Abtast-Umwandlungsvorrichtung für Fernsehgeräte nach Anspruch 2,
dadurch gekennzeichet, daß das bidimensionale lineare Filter für die Interpolation des Chrominanzsignals Bildpunkte berücksichtigt, die zu drei aufeinanderfolgenden, vertikalen Zeilen und zu drei aufeinanderfolgenden Teilbildern gehören.

4. Abtast-Umwandlungsvorrichtung für Fernsehgeräte nach Anspruch 1,
dadurch gekennzeichnet, daß der Bewegungsdetektor zum Abschätzen einer Bewegung einen Bildpunktblock in dem momentanen Teilbild berücksichtigt, der aus fünf benachbarten Bildpunkten in fünf aufeinanderfolgenden vertikalen Zeilen gebildet ist.

5. Abtast-Umwandlungsvorrichtung für Fernsehgeräte nach Anspruch 4,
dadurch gekennzeichnet, daß der Bewegungsdetektor für die Abschätzung der Bewegung einen Bildpunktblock des zweiten, direkt auf das momentane folgenden Teilbilds berücksichtigt, der aus 13 benachbarten Bildpunkten in sieben aufeinanderfolgenden vertikalen Zeilen besteht.

6. Abtast-Umwandlungsvorrichtung für Fernsehgeräte nach Anspruch 1,
dadurch gekennzeichnet, daß das bidimensionale lineare Filter durch Steuerungssignale (S) gesteuert wird, die von dem Bewegungsdeketor emittiert werden, welcher mit Selektoren (SEL) arbeitet, die in dem Filter enthalten sind, welcher die Verzögerungen selektiert, die den Signalen während der Übertragung zugeordnet sind.

7. Abtast-Umwandlungsvorrichtung für Fernsehgeräte nach Anspruch 1,
dadurch gekennzeichnet, daß das bidimensionale lineare Filter durch Steuerungssignale (CO, C1-, C1 +) gesteuert wird, die von dem Bewegungsdetektor abgegeben werden, die veränderbare Interpolationskoeffizienten für das Filter bilden.

## Revendications

1. Dispositif de conversion de balayage pour la télévision, en particulier pour un récepteur de signaux de télévision, pour convertir le balayage du mode entrelacé au mode progressif, comprenant un filtre linéaire bidimensionnel et un détecteur de déplacement d'image, dans lequel sont prévus des moyens pour adapter le filtre en fonction des données provenant du détecteur de déplacement, caractérisé par le fait que le filtre est un filtre bidimensionnel non séparable, et que les données provenant du détecteur de déplacement et adressées au filtre sont représentatives à la fois de l'amplitude et de la direction du déplacement.

2. Dispositif de conversion de balayage pour la télévision, selon la revendication 1, caractérisé par le fait que ledit filtre bidimensionnel linéaire prend en considération. pour l'interpolation du signal de luminance, les pixels appartenant à 9 lignes de trame consécutives.

3. Dispositif de conversion de balayage pour la télévision selon la revendication 2, caractérisé par le fait que ledit filtre linéaire bidimensionnel prend en considération. pour l'interpolation du signal de chrominance, les pixels appartenant à 3 lignes verticales consécutives et à 3 lignes de trame consécutives.

4. Dispositif de conversion de balayage pour la télévision selon la revendication 1, caractérisé par le fait que ledit détecteur de déplacement prend en considération, pour l'estimation du déplacement, un bloc de pixels de la ligne de trame instantanée. constitué de 5 pixels adjacents sur 5 lignes verticales consécutives.

5. Dispositif de conversion de balayage pour la télévision selon la revendication 4, caractérisé par le fait que ledit détecteur de déplacement prend en considération, pour l'estimation du déplacement, un bloc de pixels sur la deuxième ligne de trame consécutive à la ligne de trame instantanée, constitué de 13 pixels adjacents sur 7 lignes verticales consécutives.

6. Dispositif de conversion de balayage pour la télévision selon la revendication 1, caractérisé par le fait que ledit filtre bidimensionnel linéaire est commandé par des signaux de commande (S) émis par ledit détecteur de déplacement, qui agissent sur des sélecteurs (SEL) contenus dans ledit filtre, et qui sélectionnent les retards affectés aux signaux en transit.

7. Dispositif de conversion de balayage pour la télévision selon la revendication 1, caractérisé par le fait que ledit filtre bidimensionnel linéaire est commandé par des signaux de commande (C0, C1-, C1+) émis par ledit détecteur de déplacement, et qui définissent des coefficients variables d'interpolation pour ledit filtre.
